# EUROPÄISCHE PATENTSCHRIFT

(11) **EP 3 789 548 B1**
(45) Veröffentlichungstag und Bekanntmachung des Hinweises auf die Patenterteilung: **26.07.2023**
(21) Anmeldenummer: 20191287.0
(22) Anmeldetag: 17.08.2020
(51) Int. Cl.: E03C 1/04, F16K 15/02, F24D 17/00

(54) **SANITÄRE AUSLAUFARMATUR MIT MISCH- UND ABSPERRVENTILVORRICHTUNG**
SANITARY OUTLET ARMATURE WITH MIXING AND SHUT-OFF VALVE DEVICE
ROBINETTERIE D'ÉCOULEMENT SANITAIRE AVEC DISPOSITIF DE VANNE DE MÉLANGE ET D'ARRÊT

(30) Priorität: 05.09.2019 DE 102019213475
(43) Veröffentlichungstag der Anmeldung: 10.03.2021
(73) Patentinhaber: Hansgrohe SE, 77761 Schiltach (DE)
(72) Erfinder: Dold, Florian, 77716 Hofstetten (DE); Hahn, Arno, 77761 Schiltach (DE); Meier, Fridolin, 77709 Oberwolfach (DE)
(74) Vertreter: Patentanwälte Ruff, Wilhelm, Beier, Dauster & Partner mbB

(56) Entgegenhaltungen:
- EP-A1- 2 762 646
- EP-A1- 2 998 623
- EP-A1- 3 282 161
- WO-A1-2008/116242
- DE-A1-102006 021 838

## Beschreibung

Die Erfindung bezieht sich auf eine sanitäre Auslaufarmatur nach dem Oberbegriff des Anspruchs 1.

Eine solche Auslaufarmatur beinhaltet einen Armaturengehäusekörper, eine Erstfluid-Zuführung in den Armaturengehäusekörper, eine Zweitfluid-Zuführung in den Armaturengehäusekörper und einen Fluidauslauf aus dem Armaturengehäusekörper sowie eine Misch- und Absperrventilvorrichtung mit einem Erstfluidkanal, der zur Zuführung eines ersten Fluids eingerichtet ist und in den die Erstfluid-Zuführung mündet, einem Zweitfluidkanal, der zur Zuführung eines zweiten Fluids getrennt vom ersten Fluid eingerichtet ist und in den die Zweitfluid-Zuführung mündet, einem Mischfluidkanal, in den der Erstfluidkanal und der Zweitfluidkanal zur Bildung von Mischfluid des ersten und des zweiten Fluids einmünden und der zur Abgabe des Mischfluids eingerichtet ist, und einer nutzerbetätigten Hauptventileinheit, die zur Mischungsverhältniseinstellung von in den Mischfluidkanal geleitetem Erstfluid und in den Mischfluidkanal geleitetem Zweitfluid und zur Mengeneinstellung von über den Mischfluidkanal abgeführtem Mischfluid eingerichtet ist und eine nicht-selbsthaltende Zweitfluid-Volloffenstellung aufweist.

Mit einer solchen Misch- und Absperrventilvorrichtung ausgerüstete Auslaufarmaturen werden beispielsweise als sanitäre Wasserauslaufarmaturen in Form sogenannter Mischerarmaturen an Waschtischen, Küchenspülen, Badewannen und dergleichen verwendet, wobei es sich in diesen Anwendungen bei den beiden Fluiden typischerweise um Kaltwasser und Warmwasser handelt, die gebäudeseitig an getrennten Anschlüssen zur Verfügung gestellt werden. Die Auslaufarmatur dient in diesem Fall dazu, aus dem zugeführten Kaltwasser und dem zugeführten Warmwasser Mischwasser zu bereiten und dieses aus der Armatur in eine Waschbeckenmulde des Waschtisches, ein Küchenspülbecken, eine Badewanne oder dergleichen zum Gebrauch durch den Benutzer auslaufen zu lassen.

Die Auslaufarmatur kann mit dem Armaturengehäusekörper z.B. an einem Waschtisch, einer Küchenspüle, einer Badewanne oder einem benachbarten Wandbereich eines Badezimmers oder einer Küche befestigt werden, Die Erstfluid-Zuführung dient der Zuführung für das erste Fluid in den Armaturengehäusekörper, und die Zweitfluid-Zuführung dient der Zuführung für das zweite Fluid in den Armaturengehäusekörper. In den erwähnten Anwendungen als sanitäre Mischerarmatur kann es sich beim Erstfluidkanal z.B. um einen Kaltwasserkanal und beim Zweitfluidkanal z.B. um einen Warmwasserkanal handeln.

Die Misch- und Absperrventilvorrichtung dient dazu, über ihren Mischfluidkanal ein Mischfluid bereitzustellen, das in seiner Menge und in seinem Mischungsverhältnis, d.h. im Verhältnis seiner Anteile an erstem Fluid und zweitem Fluid, vom Benutzer in gewünschter Weise variabel eingestellt werden kann. Speziell besitzt Misch- und Absperrventilvorrichtung hierzu eine Mischfunktion zum Einstellen des Mischungsverhältnisses und eine Absperrfunktion zum Einstellen der Menge an abgebbarem Mischfluid. Die Hauptventileinheit dient als Nutzerschnittstelle, über die der Benutzer an der Misch- und Absperrventilvorrichtung die Einstellung des Mischungsverhältnisses und der Menge von über den Mischfluidkanal abgeführtem Mischfluid einstellen kann.

Je nach Ausführung kann die Hauptventileinheit hierfür zwei getrennte Bedienelemente zur Einstellung von Menge und Mischungsverhältnis oder ein einziges Bedienelement aufweisen, das einen einzigen Betätigungsfreiheitsgrad zur kombinierten Mengen- und Mischungsverhältniseinstellung oder zwei Betätigungsfreiheitsgrade besitzt, einen zur Mengeneinstellung und einen zur Einstellung des Mischungsverhältnisses. Misch- und Absperrventilvorrichtungen des erstgenannten Typs sind beispielsweise in Realisierungen gebräuchlich, bei denen jedes der beiden Bedienelemente z.B. drehbeweglich oder translationsbeweglich an einem Gehäuse der Ventilvorrichtung oder einem Gehäusekörper einer sanitären Auslaufarmatur angeordnet ist. Misch- und Absperrventilvorrichtungen des letztgenannten Typs sind beispielsweise in Realisierungen gebräuchlich, bei denen an einem Gehäuse der Ventilvorrichtung oder einem Armaturengehäusekörper einer sanitären Auslaufarmatur ein einziges Bedienelement kombiniert dreh- und axialbeweglich angeordnet ist, wobei die Drehbewegung der Mischungsverhältniseinstellung und die Axialbewegung der Mengeneinstellung dient oder umgekehrt, oder um zwei nicht-parallele Schwenkachsen drehbeweglich, d.h. schwenkbeweglich, angeordnet ist, wobei die eine Schwenkbewegung der Mischungsverhältniseinstellung und die andere Schwenkbewegung der Mengeneinstellung dient. Unter diesen Typ des um zwei nicht-parallele Schwenkachsen schwenkbeweglichen Bedienelements fallen insbesondere Misch- und Absperrventilvorrichtungen für sanitäre Auslaufarmaturen in Form sogenannter Einhebelmischer, bei denen als Bedienelement ein einziger Bedienhebel fungiert, der um zwei nicht-parallele, vorzugsweise zueinander senkrechte Schwenkachsen schwenkbeweglich ist. Alternativ kann ein einziges Bedienelement mit nur einem Bewegungsfreiheitsgrad vorgesehen sein, um z.B. ausgehend von einer Geschlossenstellung zunächst das erste Fluid, dann mit zunehmender Beimischung das zweite Fluid und schließlich nur das zweite Fluid durchzulassen.

Der vorliegend betrachtete Typ von Misch- und Absperrventilvorrichtung zeichnet sich weitergehend dadurch aus, dass die nutzerbetätigte Hauptventileinheit eine nicht-selbsthaltende Zweitfluid-Volloffenstellung aufweist. Mit Zweitfluid-Volloffenstellung ist hierbei, wie der Name sagt, eine Stellung der Hauptventileinheit gemeint, bei der die Misch- und Absperrventilvorrichtung zumindest für das zweite Fluid voll, d.h. maximal, geöffnet ist. Mit nicht-selbsthaltend ist, wie der Name sagt, gemeint, dass die Hauptventileinheit, wenn sie durch den Benutzer in betreffende Stellung, hier die Zweitfluid-Volloffenstellung, gebracht wurde, diese Stellung selbsttätig wieder verlässt, d.h. sich selbsttätig wieder aus dieser Stellung heraus in eine andere Ventilstellung verstellt bzw. bewegt. Bei dieser anderen, selbsttätig aus der Zweitfluid-Volloffenstellung heraus erreichten Ventilstellung kann es sich je nach Ventiltyp insbesondere um eine Mischfluid-Schließstellung oder um eine Zweitfluid-Teiloffenstellung oder eine Zweitfluid-Schließstellung ohne gleichzeitige Erstfluid-Schließstellung handeln.

Mit Mischfluid-Schließstellung ist hierbei, wie der Name sagt, eine Stellung der Hauptventileinheit gemeint, bei der die Misch- und Absperrventilvorrichtung kein Mischfluid abgibt, d.h. die Ventilvorrichtung befindet sich in ihrer vollständig geschlossenen Stellung. Dies kann je nach Systemausführung z.B. dadurch realisiert sein, dass die Hauptventileinheit den Mischfluidkanal absperrt oder sowohl den Erstfluidkanal als auch den Zweitfluidkanal absperrt. Ventilvorrichtungen dieser Art werden auch als Selbstschlussventile bezeichnet, die Hauptventileinheit in diesem Fall als Selbstschlussventileinheit. Selbstschlussventile kommen beispielsweise dann zum Einsatz, wenn gewährleistet werden soll, dass die Mischfluidabgabe nicht dauerhaft aktiv bleibt, ohne dass sich der Benutzer darum kümmern muss.

Mit Zweitfluid-Schließstellung ist, wie der Name sagt, gemeint, dass die Hauptventileinheit das zweite Fluid nicht als Mischfluidanteil abgibt, d.h. als Mischfluid wird dann das Erstfluid abgegeben, falls und insoweit die Hauptventileinheit die Zufuhr an erstem Fluid in den Mischfluidkanal und die Abgabe von Mischfluid freigibt. Bei abgesperrter Mischfluidabgabe oder abgesperrter Erstfluidzufuhr liegt die erwähnte Mischfluid-Schließstellung vor.

Mit Zweitfluid-Teiloffenstellung ist, wie der Name sagt, eine Stellung der Hauptventileinheit gemeint, bei der die Misch- und Absperrventilvorrichtung die Zufuhr an zweitem Fluid zum Mischfluid teilweise freigibt, d.h. mit einer Menge an zweitem Fluid, die größer als null und kleiner als eine maximal mögliche Zweitfluidmenge ist. Die Hauptventileinheit kann somit in diesem Fall als selbstdrosselnde Zweitfluid-Ventileinheit bezeichnet werden. Dies bringt die Eigenschaft der Hauptventileinheit zum Ausdruck, dass sie selbsttätig die Zweitfluidmenge drosselt, indem sie ihre Zweitfluid-Volloffenstellung, wenn der Benutzer diese Stellung eingestellt hat, selbsttätig verlässt und eine Stellung einnimmt, in der die Zweitfluidmenge demgegenüber reduziert ist, d.h. die Zweitfluid-Teiloffenstellung oder die Zweitfluid-Schließstellung, sobald der Benutzer die Hauptventileinheit nicht mehr in der Zweitfluid-Volloffenstellung festhält. Die Zweitfluid-Teiloffenstellung wird typischerweise dadurch realisiert, dass die Hauptventileinheit den Zweitfluidkanal nicht ganz absperrt und nicht vollständig offen hält, sondern den Durchlassquerschnitt für das zweite Fluid in den Mischkanal gegenüber dem maximalen Wert in der Zweitfluid-Volloffenstellung auf einen kleineren Wert größer als null reduziert.

Ventilvorrichtungen dieses Typs werden in sanitären Auslaufarmaturen beispielsweise zu dem Zweck eingesetzt, im Gebrauch dadurch Wasser, insbesondere Warmwasser, zu sparen, dass sich die Hauptventileinheit selbsttätig von der Zweitfluid-Volloffenstellung in die Zweitfluid-Teiloffenstellung verstellt, ohne dass der Benutzer selbst darauf achten muss. Wenn die Hauptventileinheit zusätzlich in analoger Weise als selbstdrosselnde Erstfluid-Ventileinheit ausgeführt ist, soll durch eine solche Ventilvorrichtung im Betrieb sowohl Erstfluid, wie Kaltwasser, als auch Zweitfluid, wie Warmwasser, eingespart werden. In letzterem Fall weist die Hauptventileinheit eine nicht-selbsthaltende Volloffenstellung unabhängig vom eingestellten Mischungsverhältnis auf und gelangt aus der betreffenden Volloffenstellung bei gleichbleibendem Mischungsverhältnis selbsttätig in eine Teiloffenstellung, in der für die Bildung des Mischfluids die Menge sowohl an erstem als auch an zweitem Fluid gedrosselt ist, d.h. geringer ist als eine maximal mögliche Menge in der Volloffenstellung.

Sanitäre Misch- und Absperrventilvorrichtungen dieser Art vom oben erwähnten Selbstschlussventiltyp sind beispielsweise in den Offenlegungsschriften DE 10 2014 113 386 A1 und EP 2 998 623 A1 offenbart. Selbstschlussventile werden häufig auch in reinen Absperrventilen ohne Fluidmischfunktion verwendet. Derartige sanitäre Absperrventilvorrichtungen sind z.B. in den Offenlegungsschriften DE 38 35 497 A1 und DE 10 2007 011 199 A1 sowie der Patentschrift DE 43 22 289 C1 und der älteren Patentanmeldung DE 10 2018 204 147.4 offenbart.

Sanitäre Misch- und Absperrventilvorrichtungen vom oben erwähnten Typ mit selbsttätig aus der Zweitfluid-Volloffenstellung in eine Zweitfluid-Teiloffenstellung gelangender Ventileinheit sind beispielsweise in den Offenlegungsschriften DE 10 2016 214 781 A1 und WO 2009/131529 A1 und der Gebrauchsmusterschrift DE 80 00 599 U1 offenbart, dort speziell in Wassersparausführungen, bei denen die Hauptventileinheit unabhängig vom eingestellten Mischungsverhältnis von Kaltwasser und Warmwasser selbsttätig von einer bei beliebigem, gegebenem Mischungsverhältnis voll geöffneten Stellung in eine Teiloffenstellung mit gleichem Mischungsverhältnis gelangt.

Die Patentschrift DE 10 2018 206 354 B3 offenbart eine Misch- und Absperrventilvorrichtung, die dem eingangs erwähnten Ventiltyp mit der Ausnahme entspricht, dass die Hauptventileinheit keine nicht-selbsthaltende Zweitfluid-Volloffenstellung aufweist, sondern eine Selbstrückstellung des Mischungsverhältnisses in dasjenige Mischungsverhältnis, das einem reinen Durchlassen des ersten Fluids, vorzugsweise Kaltwasser, ohne Zumischung des zweiten Fluids entspricht, wobei diese Selbstrückstellung des Mischungsverhältnisses auf allein das erste Fluid nur dann erfolgt, wenn sich die Hauptventileinheit in einer Schließstellung mit anderem eingestelltem Mischungsverhältnis befindet. Mit diesem Typ von Ventileinrichtungen soll erreicht werden, dass sich die Hauptventileinheit in der geschlossenen Ventilausgangsstellung definiert stets in der dem Durchlassen nur des ersten Fluids entsprechenden Mischungsverhältnisstellung befindet, vorzugsweise in der entsprechenden Kaltwasserstellung, so dass beim Öffnen des Ventils aus der Ausgangsstellung zunächst ausschließlich das erste Fluid abgegeben wird. Eine ähnliche Misch- und Absperrventilvorrichtung ohne Selbstrückstellung wird von der Anmelderin unter der Artikelnummer 92529000 für einen Waschtischmischer vertrieben und umfasst einen als Kartusche ausgebildeten, zylindrischen Ventilgehäusekörper und eine darin untergebrachte Ventileinheit und dieser zugeordnet eine Absperrbedieneinrichtung und eine Mischbedieneinrichtung, wobei die Absperrbedieneinrichtung eine Drucktaste beinhaltet, die in einer Axialrichtung des Ventilgehäusekörpers translationsbeweglich angeordnet ist. Die Mischbedieneinrichtung ist um eine zur Axialrichtung des Ventilgehäusekörpers parallele Mischdrehachse drehbeweglich angeordnet. Durch Drücken der Drucktaste kann die Wasserabgabe der Sanitärarmatur, in welcher die Misch- und Absperrventilvorrichtung eingesetzt ist, abgesperrt oder freigegeben werden, und durch Verdrehen der Mischbedieneinrichtung lässt sich das Mischungsverhältnis von zugeführtem Kaltwasser und zugeführtem Warmwasser und damit die Temperatur des solchermaßen bereitgestellten Mischwassers stufenlos einstellen.

Bei sanitären Auslaufarmaturen der eingangs genannten, gattungsgemäßen Art nach dem Oberbegriff des Anspruchs 1 weist die Misch- und Absperrventilvorrichtung zudem eine Bypassventileinheit auf, die im Zweitfluid-Bypasskanal angeordnet ist und nutzerbetätigt zwischen einer Bypass-Schließstellung und einer Bypass-Offenstellung verstellbar ist. Eine solche sanitäre Auslaufarmatur ist in der Offenlegungsschrift EP 2 762 646 A1 als Bestandteil einer Sanitäranordnung offenbart, wobei die dortige Armatur einen Bypassanschluss für eine Spülung unter Umgehung der Misch- und Absperrventilvorrichtung beinhaltet und die Sanitäranordnung in mindestens einem Zulauf eine Abzweigung aufweist, die mit dem Bypassanschluss zur Freigabe einer Spülung mittels einer Bypass-Absperrvorrichtung in Verbindung steht, die in eine Baueinheit außerhalb der Armatur integriert ist.

Die Offenlegungsschrift DE 10 2006 021 838 A1 offenbart eine weitere herkömmliche sanitäre Wasserauslaufarmatur mit einem ein Mischventil umgehenden Zweitfluid-Bypasskanal, in dem sich eine Bypassventileinheit befindet, die in einer Zweitfluid-zuführung außerhalb eines das Mischventil aufnehmenden Armaturengehäusekörpers angeordnet ist und über eine Steuereinheit elektrisch angesteuert werden kann, um zu vorgebbaren Zeiten geöffnet bzw. geschlossen zu werden.

Die Offenlegungsschrift WO 2008/116242 A1 offenbart eine weitere Bypassanordnung für ein wasserführendes System mit Kaltwasser und Warmwasser, wobei mit der dortigen Bypassanordnung bei Bedarf Warmwasser unter Umgehung eines Sicherheitsmischventils zu einem Wasserausgang geleitet werden kann.

Der Erfindung liegt als technisches Problem die Bereitstellung einer sanitären Auslaufarmatur der eingangs genannten Art zugrunde, die in ihrer Funktionalität und/oder baulichen Realisierbarkeit gegenüber dem oben erläuterten Stand der Technik erweitert bzw. verbessert ist.

Die Erfindung löst dieses Problem durch die Bereitstellung einer sanitären Auslaufarmatur mit den Merkmalen des Anspruchs 1. Vorteilhafte Weiterbildungen der Erfindung sind in den Unteransprüchen angegeben.

Bei der erfindungsgemäßen sanitären Auslaufarmatur weist der Armaturengehäusekörper eine Bypassventil-Betätigungsöffnung auf, durch die hindurch die Bypassventileinheit nutzerbetätigbar ist. In Verbindung mit den weiteren, gattungsgemäßen Merkmalen stellt dies eine vorteilhafte Ausrüstung der Auslaufarmatur mit der Misch- und Absperrventilvorrichtung dar, bei der es sich insbesondere um eine Wasserauslaufarmatur handeln kann, der Kaltwasser als das erste Fluid und Warmwasser als das zweite Fluid zugeführt werden kann. Über die Bypassventil-Betätigungsöffnung im Armaturengehäusekörper kann der Benutzer die Bypassventileinheit betätigen und dadurch wahlweise die Zweitfluid-Bypassfunktionalität der Misch- und Absperrventilvorrichtung aktivieren und deaktivieren. Aufgrund dieser Eigenschaften besitzt die sanitäre Auslaufarmatur gemäß der Erfindung eine gegenüber dem oben erläuterten Stand der Technik erweiterte bzw. verbesserte Funktionalität und/oder bauliche Realisierbarkeit. Insbesondere ist dadurch die Möglichkeit geschaffen, die Bypassventileinheit in den Armaturengehäusekörper zu integrieren und sie dort in einfacher Weise durch den Benutzer betätigen zu können.

Bei der vorliegenden Misch- und Absperrventilvorrichtung ist die Fähigkeit, selbsttätig aus einer Volloffenstellung und jedenfalls aus der Volloffenstellung mit maximaler Zufuhr an Zweitfluid für das Mischfluid, d.h. der Zweitfluid-Volloffenstellung, heraus zu gelangen, mit der Fähigkeit kombiniert, bei Bedarf unter Umgehung der Hauptventileinheit das zweite Fluid über den Zweitfluid-Bypasskanal in den Mischfluidkanal zu führen, was der Benutzer durch entsprechendes Verstellen der Bypassventileinheit von deren Schließstellung in deren Offenstellung bewirken kann. Die letztgenannte Funktionalität ist insbesondere für Anwendungen von Vorteil, bei denen gewünscht ist, allein das zweite Fluid ohne zugemischtes erstes Fluid über den Mischfluidkanal abzugeben, ohne dass der Benutzer dazu die Hauptventileinheit ständig entgegen ihrer nicht-selbsthaltenden Charakteristik in dieser Volloffenstellung halten muss, soweit ihm dies überhaupt möglich ist und nicht z.B. von einer zwangsweisen Selbstschlussfunktion der Hauptventileinheit vereitelt oder jedenfalls behindert wird.

Eine nützliche Anwendung dieser Funktionalität stellt die sogenannte thermische Desinfektion von sanitären Auslaufarmaturen dar. Bei dieser thermischen Desinfektion ist z.B. für sanitäre Wasserauslaufarmaturen in öffentlichen Einrichtungen ein Durchspülen der Auslaufarmatur mit dem über die entsprechende Warmwasser-Zuführung zugeführten Warmwasser, vorzugsweise ohne Zumischung von an der entsprechenden Kaltwasser-Zuführung anstehendem Kaltwasser, für einen ausreichend langen Zeitraum gefordert. Dieser Zeitraum ist typischerweise länger als der Verzögerungszeitraum gängiger Selbstschlussventile, die daher das Warmwasser für diesen Zweck der thermischen Desinfektion nicht lange genug in der geforderten Menge durchlassen.

Es versteht sich, dass diese Misch- und Absperrventilvorrichtung auch für weitere Anwendungen geeignet ist, bei denen der Bedarf besteht, über den Mischfluidkanal das zweite Fluid in einer Menge und über einen Zeitraum hinweg abgeben zu können, die von der Charakteristik der Hauptventileinheit, selbsttätig die Zweitfluid-Volloffenstellung zu verlassen, unbeeinflusst bleibt. Dies wird durch die Führung des Zweitfluids im Bypasskanal an der Hauptventileinheit vorbei gewährleistet. Durch Verstellen der Bypassventileinheit zwischen ihrer Schließstellung und ihrer Offenstellung kann der Benutzer diese Führung des Zweitfluids in den Mischfluidkanal an der Hauptventileinheit vorbei wahlweise aktivieren und deaktivieren.

In einer Weiterbildung der Erfindung ist die Bypassventileinheit sowohl in ihrer Bypass-Schließstellung als auch in ihrer Bypass-Offenstellung selbsthaltend ausgeführt. Dies bedeutet, dass die Bypassventileinheit in der Schließstellung bzw. der Offenstellung verbleibt, solange auf sie keine anderweitigen äußeren Kräfte einwirken, beispielsweise eine vom Benutzer ausgeübte Betätigungskraft zum Verstellen der Bypassventileinheit. In alternativen Ausführungen ist die Bypassventileinheit z.B. nur in ihrer Schließstellung selbsthaltend ausgeführt, und der Benutzer hält sie für den gewünschten Zeitraum in ihrer Offenstellung fest.

In einer Weiterbildung der Erfindung umfasst die Bypassventileinheit einen Ventilschließkörper, der zwischen einer selbsthaltenden Schließstellung und einer rastend selbsthaltenden, nutzerbetätigt ausrastbaren Offenstellung bewegbar ist. Die Eigenschaft des Ventilschließkörpers, selbsthaltend in seiner Schließstellung zu verbleiben, stellt für die Bypassventileinheit deren Selbsthaltefunktion in ihrer Schließstellung zur Verfügung. In der Offenstellung behält der Ventilschließkörper durch eine Verrastung seine Offenstellung bei, was für die Bypassventileinheit deren Selbsthaltefunktion in ihrer Offenstellung bereitstellt. Die Verrastung kann vom Benutzer ausgerastet werden, wodurch der Benutzer die Bypassventileinheit aus der Bypass-Offenstellung heraus in die Bypass-Schließstellung verstellen kann. In alternativen Ausführungen ist der Ventilschließkörper in seiner Offenstellung nicht selbsthaltend, sondern wird z.B. vom Benutzer über den benötigten Zeitraum hinweg in der Offenstellung gehalten.

In einer Ausgestaltung der Erfindung ist die Bypassventileinheit als Rückschlagventileinheit ausgeführt, die durch einen Fluiddruck im Zweitfluidkanal in Richtung ihrer Schließstellung beaufschlagt ist, so dass die Bypassventileinheit den Bypasskanal im normalen Betrieb der Misch- und Absperrventilvorrichtung durch den Fluiddruck im Zweitfluidkanal selbsttätig geschlossen halten kann. Durch diese Realisierung als Rückschlagventileinheit kann somit in vorteilhaft einfacher Weise die Selbsthalteeigenschaft der Bypassventileinheit in ihrer Bypass-Schließstellung bereitgestellt werden. In alternativen Ausführungen ist die Bypassventileinheit z.B. durch eine vom Benutzer ausrastbare Verrastung selbsthaltend in ihrer Schließstellung gehalten.

In einer Weiterbildung der Erfindung beinhaltet die Misch- und Absperrventilvorrichtung einen Hauptgehäusekörper, in dem die Hauptventileinheit angeordnet ist, und einen Zusatzgehäusekörper, der über korrespondierende, aneinanderliegende Koppelflächen mit dem Hauptgehäusekörper gekoppelt ist und durch den hindurch sich jeweils getrennt voneinander der Erstfluidkanal, der Zweitfluidkanal und der Mischfluidkanal erstrecken. Der Zweitfluid-Bypasskanal ist im Zusatzgehäusekörper ausgebildet, und die Bypassventileinheit ist dementsprechend im Zusatzgehäusekörper angeordnet. Diese Ausführung hat den Vorteil, dass die Zweitfluid-Bypassfunktionalität mit relativ geringem Aufwand realisierbar ist, da für die Ventilvorrichtung ein gängiger bzw. bereits verwendeter Hauptgehäusekörper mit der darin angeordneten Hauptventileinheit praktisch unverändert übernommen bzw. beibehalten werden kann und lediglich der Zusatzgehäusekörper und dessen geeignete Ankopplung an den Hauptgehäusekörper zusätzlich bereitgestellt werden müssen, wobei die gesamte Zweitfluid-Bypassfunktionalität im Zusatzgehäusekörper verwirklicht werden kann. Der Zusatzgehäusekörper kann in entsprechenden Ausführungen als ein Adapterboden für den z.B. als Kartuschenkörper ausgebildeten Hauptgehäusekörper fungieren, um die Ventilvorrichtung bzw. den Kartuschenkörper an eine jeweils vorliegende Anschlusskonfiguration z.B. einer sanitären Auslaufarmatur zu adaptieren. In alternativen Ausführungen ist die Zweitfluid-Bypassfunktionalität im Inneren eines Hauptgehäusekörpers der Misch- und Absperrventilvorrichtung integriert.

In einer Weiterbildung der Erfindung ist die Hauptventileinheit als Selbstschlussventileinheit ausgeführt, die selbsttätig in eine Mischfluid-Schließstellung gelangt. Dies kombiniert in vorteilhafter Weise die Zweitfluid-Bypassfunktionalität mit der an sich bekannten Selbstschlussfunktionalität. Bei deaktivierter Zweitfluid-Bypassfunktionalität arbeitet die Misch- und Absperrventilvorrichtung mit der Selbstschlussfunktionalität, bei aktivierter Zweitfluid-Bypassfunktionalität überspielt die Misch- und Absperrventilvorrichtung diese Selbstschlussfunktionalität bezüglich des zweiten Fluids, das dann trotz vollständig geschlossener Hauptventileinheit über den Bypasskanal in den Mischfluidkanal gelangen und dort von der Misch- und Absperrventilvorrichtung abgegeben werden kann. Die Misch- und Absperrventilvorrichtung eignet sich alternativ jedoch auch für Anwendungen, bei denen die Hauptventileinheit keine Selbstschlussfunktionalität besitzt, z.B. für Anwendungen, bei denen die Hauptventileinheit die oben erwähnte, an sich bekannte Wassersparfunktionalität besitzt.

In einer Weiterbildung der Erfindung ist die Hauptventileinheit als selbstdrosselnde Zweitfluid-Ventileinheit ausgeführt, die selbsttätig aus der Zweitfluid-Volloffenstellung in eine Zweitfluid-Schließstellung oder eine Zweitfluid-Teiloffenstellung gelangt. Diese Ausführung ist beispielsweise für Anwendungen von Vorteil, die Bedarf an einer Wassersparfunktion haben und bei denen die Hauptventileinheit zwar wie bei der Selbstschlussfunktionalität selbsttätig aus der Zweitfluid-Volloffenstellung und optional auch aus einer anderen Volloffenstellung mit beliebigem eingestelltem Mischungsverhältnis herausgelangt, jedoch nicht in die vollständig absperrende Ventilstellung, in der die Ventilvorrichtung kein Fluid abgibt, sondern in eine hinsichtlich der abgegebenen Fluidmenge nur gedrosselte Stellung. In dieser gedrosselten Stellung gibt die Ventilvorrichtung über den Mischfluidkanal noch eine gewisse Menge an Mischfluid ab, das dann je nach eingestelltem Mischungsverhältnis allein das erste Fluid ist, was der Zweitfluid-Schließstellung der Hauptventileinheit entspricht, oder allein das zweite Fluid oder eine gedrosselte Mischung beider Fluide ist, was der Zweitfluid-Teiloffenstellung der Hauptventileinheit entspricht. In alternativen Ausführungen ist die Hauptventileinheit z.B. gleichzeitig als Selbstschlussventil ausgeführt, das selbsttätig in die Zweitfluid-Schließstellung und zudem in seine Erstfluid-Schließstellung, d.h. in seine vollständige Geschlossenstellung gelangt, in der die Ventilvorrichtung kein Fluid abgibt, d.h. kein Mischfluid über seinen Mischfluidkanal abgibt.

In einer Weiterbildung der Erfindung beinhaltet die Bypassventileinheit eine Werkzeugschnittstelle zur Ankopplung eines Bypassventil-Betätigungswerkzeugs, das in die Bypassventil-Betätigungsöffnung einführbar ist. Der Benutzer kann in diesem Fall die Zweitfluid-Bypassfunktionalität der Misch- und Absperrventilvorrichtung unter Zuhilfenahme des betreffenden Werkzeugs aktivieren bzw. deaktivieren. In alternativen Ausführungen kann die Bypassventileinheit für eine werkzeuglose und/oder ferngesteuerte Betätigung durch den Benutzer ausgelegt sein, z.B. über ein am Armaturengehäusekörper angeordnetes Bedienelement zur mechanisch gekoppelten oder zur ferngesteuerten Betätigung der Bypassventileinheit.

In einer Weiterbildung der Erfindung beinhaltet die Hauptventilbetätigungseinheit für die Hauptventileinheit ein am Armaturengehäusekörper dreh- und axialbeweglich angeordnetes Hauptventil-Bedienelement, dessen Axialbewegung zur Mengeneinstellung dient und dessen Drehbewegung zur Mischungsverhältniseinstellung dient. Dies stellt eine vergleichsweise einfach realisierbare und in der Handhabung für den Benutzer vorteilhafte Realisierung für die Hauptventilbetätigungseinheit dar. Mit nur einem einzigen Bedienelement kann die Misch- und Absperrventilanordnung vom Benutzer hinsichtlich Menge und Mischungsverhältnis des abzugebenden Fluids eingestellt werden, wenn die Zweitfluid-Bypassfunktionalität inaktiv ist. In alternativen Ausführungen dient die Axialbewegung zur Mischungsverhältniseinstellung und die Drehbewegung zur Mengeneinstellung. In weiteren alternativen Ausführungen beinhaltet die Hauptventilbetätigungseinheit für die Hauptventileinheit ein am Armaturengehäusekörper um zwei nicht-parallele Schwenkachsen verschwenkbar angeordnetes Hauptventil-Bedienelement, z.B. ein Schwenkhebel der von herkömmlichen Einhebelmischern an sich bekannten Art.

Vorteilhafte Ausführungsformen der Erfindung sind in den Zeichnungen dargestellt. Diese und weitere vorteilhafte Ausführungsformen der Erfindung werden nachfolgend näher beschrieben. Hierbei zeigen:
- Fig. 1: eine schematische Blockdiagrammdarstellung einer Misch- und Absperrventilvorrichtung mit Absperrventil im Mischfluidkanal und mit Bypasskanal,
- Fig. 2: eine schematische Blockdiagrammdarstellung einer Misch- und Absperrventilvorrichtung mit Absperrventilen im Erst- und Zweitfluidkanal und mit Bypasskanal,
- Fig. 3: eine Längsschnittansicht einer sanitären Auslaufarmatur mit einer Misch- und Absperrventilvorrichtung des Typs von Fig. 1 bei geschlossenem Zweitfluid-Bypasskanal,
- Fig. 4: die Ansicht von Fig. 3 bei geöffnetem Zweitfluid-Bypasskanal,
- Fig. 5: eine Explosionsansicht eines Zusatzgehäusekörpers der Misch- und Absperrventilvorrichtung in Fig. 3 mit Zweitfluid-Bypasskanal, Bypassventileinheit mit Ventilschließkörper und Werkzeug,
- Fig. 6: eine Seitenansicht der Komponenten von Fig. 5 in zusammengefügter Darstellung,
- Fig. 7: eine gegenüber Fig. 6 um 90° gedrehte Seitenansicht des Zusatzgehäusekörpers,
- Fig. 8: eine Schnittansicht längs einer Linie VIII-VIII in Fig. 6,
- Fig. 9: eine Schnittansicht längs einer Linie IX-IX in Fig. 7 bei geschlossenem Zweitfluid-Bypasskanal,
- Fig. 10: eine Schnittansicht längs einer Linie X-X bei geschlossenem Zweitfluid-Bypasskanal,
- Fig. 11: die Ansicht von Fig. 10 bei geöffnetem Zweitfluid-Bypasskanal,
- Fig. 12: die Ansicht von Fig. 9 bei geöffnetem Zweitfluid-Bypasskanal,
- Fig. 13: eine Schnittansicht längs einer Linie XIII-XIII in Fig. 4,
- Fig. 14: eine Explosionsansicht entsprechend Fig. 5 für eine Variante der Misch- und Absperrventilvorrichtung mit selbsthaltender Bypass-Offenstellung,
- Fig. 15: die Ansicht von Fig. 3 mit der Variante der Misch- und Absperrventilvorrichtung gemäß Fig. 14,
- Fig. 16: die Ansicht von Fig. 13 für die Ausführungsvariante der Fig. 14 und 15,
- Fig. 17: eine Seitenansicht der Bypassventileinheit für den Zweitfluid-Bypasskanal in der Ausführungsvariante von Fig. 14,
- Fig. 18: die Ansicht von Fig. 16 in Teildarstellung mit vorgeschobenem Ventilschließkörper der Bypassventileinheit,
- Fig. 19: die Ansicht von Fig. 17 bei vorgeschobenem Ventilschließkörper gemäß Fig. 18,
- Fig. 20: die Ansicht von Fig. 17 bei verdrehtem Ventilschließkörper,
- Fig. 21: die Ansicht von Fig. 20 mit dem Ventilschließkörper in zurückbewegter Offenstellung und
- Fig. 22: die Ansicht von Fig. 18 mit der Bypassventileinheit in ihrer Offenstellung.

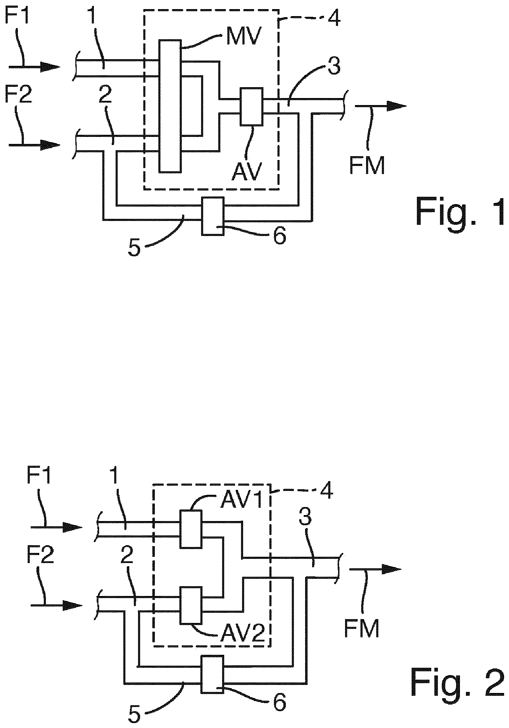

Die Misch- und Absperrventilvorrichtung der erfindungsgemäßen sanitären Auslaufarmatur umfasst, wie in den Fig. 1 und 2 zu entsprechenden Realisierungen blockdiagrammatisch dargestellt, einen Erstfluidkanal 1, der zur Zuführung eines ersten Fluids F1 eingerichtet ist, einen Zweitfluidkanal 2, der zur Zuführung eines zweiten Fluids F2 getrennt vom ersten Fluid F1 eingerichtet ist, einen Mischfluidkanal 3, in den der Erstfluidkanal 1 und der Zweitfluidkanal 2 zur Bildung von Mischfluid FM des ersten und des zweiten Fluids F1, F2 einmünden und der zur Abgabe des Mischfluids FM eingerichtet ist, und eine nutzerbetätigte Hauptventileinheit 4. Die Hauptventileinheit 4 ist zur Mischungsverhältniseinstellung von in den Mischfluidkanal 3 geleitetem Erstfluid F1 und in den Mischfluidkanal 3 geleitetem Zweitfluid F2 und zur Mengeneinstellung von über den Mischfluidkanal 3 abgeführtem Mischfluid FM eingerichtet und weist eine nicht-selbsthaltende Zweitfluid-Volloffenstellung auf.

Letzteres bedeutet, wie oben erläutert, dass die Hauptventileinheit 4 dafür eingerichtet ist, eine vom Benutzer eingestellte Ventiloffenstellung, bei der zumindest das zweite Fluid F2 und optional auch das erste Fluid F1 ungedrosselt mit maximal möglicher Zufuhrmenge in den Mischfluidkanal 3 gelangen kann, selbsttätig zu verlassen, sobald der Benutzer die Hauptventileinheit 4 in dieser Stellung loslässt, und in eine Stellung zu gelangen, in der die Zufuhr an zweitem Fluid F2 in den Mischfluidkanal 3 vollständig unterbunden ist oder nur noch gedrosselt mit einer gegenüber der maximal möglichen Menge kleineren Zweitfluidmenge erfolgt.

Fig. 1 zeigt eine Realisierung der Hauptventileinheit 4, bei der die Hauptventileinheit 4 ein auf den Erstfluidkanal 1 und den Zweitfluidkanal 2 wirkendes Mischventil MV und ein im Mischfluidkanal 3 angeordnetes Absperrventil AV umfasst. Über das Mischventil MV kann der Benutzer das Mischungsverhältnis für das erste Fluid F1 und das zweite Fluid F2 zur Bildung des Mischfluids FM in an sich bekannter Weise einstellen, was daher hier keiner näheren Erläuterung bedarf. Über das Absperrventil AV kann der Benutzer die Menge an abgeführtem Mischfluid FM in ebenfalls an sich bekannter Weise variabel zwischen einer Nullmenge, d.h. vollständig abgesperrtem Mischfluidkanal 3, und einer für die gegebene Systemauslegung der Ventilvorrichtung maximal möglichen Menge einstellen, was hier ebenfalls keiner näheren Erläuterung bedarf. Je nach Auslegung arbeitet das Absperrventil binär als reines Ein/Aus-Ventil, wobei optional eine feinere Mengenregelungsfunktion in das Mischventil MV integriert sein kann, oder als Ventil mit mehrstufig oder kontinuierlich einstellbarer Fluiddurchlassmenge.

Fig. 2 zeigt eine Realisierung der Misch- und Absperrventilvorrichtung, die derjenigen von Fig. 1 mit dem Unterschied entspricht, dass sie anstelle des Mischventils MV und des mischfluidkanalseitigen Absperrventils AV ein erstes Absperrventil AV1 im Erstfluidkanal 1 und ein zweites Absperrventil AV2 im Zweitfluidkanal 2 umfasst. Bei diesen Absperrventilen AV1, AV2 kann es sich ebenso wie beim Absperrventil AV in der Ausführung von Fig. 1 und den übrigen vorliegend genannten Absperrventilen um solche mit quasi-kontinuierlicher oder kontinuierlicher Mengenregulierungsfunktion, mit denen das betreffende Fluid in entsprechend mehrstufig oder stufenlos verstellbarer Menge abgegeben werden kann, oder um reine Ein/Aus-Ventile handeln, bei Bedarf mit Verlagerung eines Teils der Mengenregulierfunktion in das oder die Mischventile, wie das Mischventil MV von Fig. 1. Je nach Bedarf und Systemausführung handelt es sich bei den beiden Absperrventilen AV1, AV2 um zwei voneinander unabhängig ansteuerbare bzw. betätigbare Ventile oder um zwei gekoppelt ansteuerbare bzw. betätigbare, optional in eine gemeinsame Ventileinheit integrierte Ventile.

In beiden Ausführungsvarianten gemäß den Fig. 1 und 2 kann die Hauptventileinheit 4 je nach Bedarf als Selbstschlussventileinheit oder als Ventileinheit in Mischfluid- bzw. Zweitfluid-Sparausführung ausgelegt sein, wie oben insbesondere in Verwendung bei sanitären Auslaufarmaturen zur Vermeidung einer unbeabsichtigt dauerhaften Wasserabgabe bzw. Warmwasserabgabe oder zur Einsparung von Wasser bzw. Warmwasser erläutert.

Des Weiteren weist die Misch- und Absperrventilvorrichtung, wie in den Fig. 1 und 2 veranschaulicht, einen Zweitfluid-Bypasskanal 5 und eine in diesem angeordnete Bypassventileinheit 6 auf. Der Zweitfluid-Bypasskanal 5 führt vom Zweitfluidkanal 2 in den Mischfluidkanal 3, wobei er die Hauptventileinheit 4 bezüglich des Zweitfluids F2 umgeht. Die Bypassventileinheit 6 ist nutzerbetätigt zwischen einer Bypass-Schließstellung und einer Bypass-Offenstellung verstellbar.

In einem normalen Betrieb befindet sich die Bypassventileinheit 6 in ihrer Schließstellung und hält den Zweitfluid-Bypasskanal 5 geschlossen. Durch Betätigung der Hauptventileinheit 4, wie des Mischventils MV und des Absperrventils AV von Fig. 1 bzw. der Absperrventile AV1, AV2 von Fig. 2, stellt der Benutzer die Menge und das Mischungsverhältnis an von der Misch- und Absperrventilvorrichtung abzugebendem Mischfluid FM in gewünschter Weise ein, so dass je nach Einstellung der Hauptventileinheit 4 als Mischfluid FM nur das erste Fluid F1 in maximal möglicher oder reduzierter Menge, nur das zweite Fluid F2 in maximal möglicher oder reduzierter Menge oder beide Fluide F1, F2 im gewünschten Verhältnis gemischt in maximal möglicher oder reduzierter Menge abgegeben wird, einschließlich der Möglichkeit, die Ventilvorrichtung vollständig geschlossen zu halten, d.h. kein Mischfluid FM abzugeben.

Zur Aktivierung einer Bypass-Betriebsart der Misch- und Absperrventilvorrichtung betätigt der Benutzer die Bypassventileinheit 6 aus ihrer Schließstellung in ihre Offenstellung, wodurch das zweite Fluid F2 über den Bypasskanal 5 und die offene Bypassventileinheit 6 unter Umgehung der Hauptventileinheit 4 in den Mischfluidkanal 3 gelangen kann. Da die Zweitfluid-Volloffenstellung der Hauptventileinheit 4 nicht-selbsthaltend ist, befindet sich die Hauptventileinheit 4 in dieser Bypass-Betriebsart typischerweise nicht in ihrer Zweitfluid-Volloffenstellung, sondern in einer Stellung, in der sie das Zweitfluid F2 nicht oder nur in reduzierter Menge in den Mischfluidkanal 3 durchlässt. Wenn sich die Hauptventileinheit 4 hierbei in einer Stellung befindet, in der sie die Zufuhr an erstem Fluid F1 in den Mischfluidkanal 3 vollständig unterbindet, gibt die Misch- und Absperrventilvorrichtung in der Bypass-Betriebsart als Mischfluid FM über den Mischfluidkanal 3 ausschließlich das zweite Fluid F2 ab, das über den Bypasskanal 5 und optional zusätzlich in reduzierter Menge über die Hauptventileinheit 4 in den Mischfluidkanal 3 gelangt.

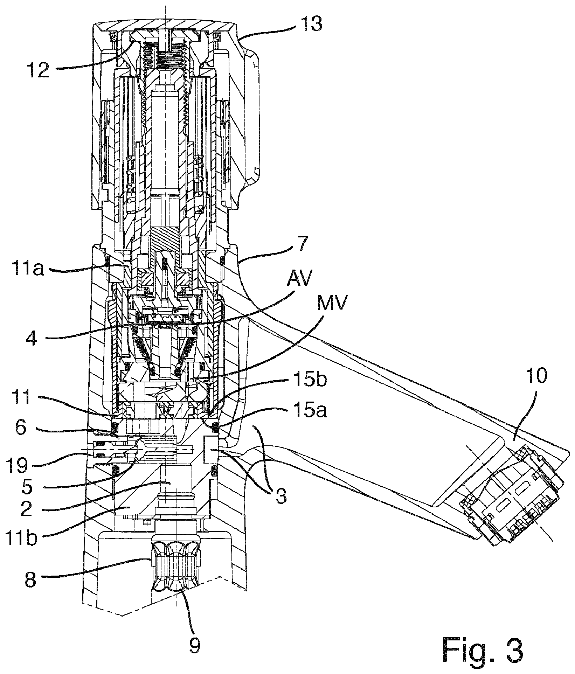

Die erfindungsgemäße sanitäre Auslaufarmatur umfasst, wie exemplarisch in den Ausführungsbeispielen der Fig. 3 bis 22 veranschaulicht, einen Armaturengehäusekörper 7, eine Erstfluid-Zuführung 8 in den Armaturengehäusekörper 7, eine Zweitfluid-Zuführung 9 in den Armaturengehäusekörper 7, einen Fluidauslauf 10 aus dem Armaturengehäusekörper 7, eine Misch- und Absperrventilvorrichtung 11 und eine am Armaturengehäusekörper 7 angeordnete Hauptventilbetätigungseinheit 12 als Nutzerschnittstelle zur Betätigung der Hauptventileinheit 4 der Misch- und Absperrventilvorrichtung 11. Dabei mündet die Erstfluid-Zuführung 8 in den Erstfluidkanal 1 der Misch- und Absperrventilvorrichtung 11 und die Zweitfluid-Zuführung 9 mündet in den Zweitfluidkanal 2 der Misch- und Absperrventilvorrichtung 11. Der Armaturengehäusekörper 7 weist eine Bypassventil-Betätigungsöffnung 19 auf, durch die hindurch die Bypassventileinheit 6 der Misch- und Absperventilvorrichtung 11 nutzerbetätigbar ist.

In den Ausführungsbeispielen der Fig. 3 bis 22 ist die Hauptventileinheit 4 als Selbstschlussventileinheit, die selbsttätig in eine Mischfluid-Schließstellung gelangt, in einer Konfiguration realisiert, wie sie der Fig. 1 mit dem Absperrventil AV als Selbstschlussventil in einer Ausführungsart entspricht, die z.B. in von der Anmelderin vertriebenen Mischerarmaturen verwendet und in der oben erwähnten älteren Patentanmeldung DE 10 2018 204 147.4 der Anmelderin offenbart ist. Der Mischventilteil der Hauptventileinheit 4, d.h. das Mischventil MV gemäß Fig. 1, kann hierfür z.B. von einer Bauart entsprechend derjenigen sein, wie sie in der oben erwähnten Mischervorrichtung der Anmelderin mit der Artikelnummer 92529000 oder in der oben erwähnten Patentschrift DE 10 2018 206 354 B3 offenbart ist. Die Hauptventilbetätigungseinheit 12 beinhaltet in dieser Ausführung ein am Armaturengehäusekörper 7 dreh- und axialbeweglich angeordnetes Hauptventil-Bedienelement 13, dessen Axialbewegung zur Mengeneinstellung dient, d.h. das Absperrventil AV mit dessen Selbstschlussfunktionalität steuert, und dessen Drehbewegung zur Mischungsverhältniseinstellung dient, d.h. zur Einstellung der Menge an durchgelassenem ersten Fluid F1 im Verhältnis zur Menge an durchgelassenem zweiten Fluid F2. In alternativen Realisierungen beinhaltet die Hauptventilbetätigungseinheit 12 einen in zwei nicht-parallele Schwenkrichtungen verschwenkbaren Bedienhebel oder zwei getrennte Bedienelemente zur Mengeneinstellung einerseits und zur Mischungsverhältniseinstellung andererseits.

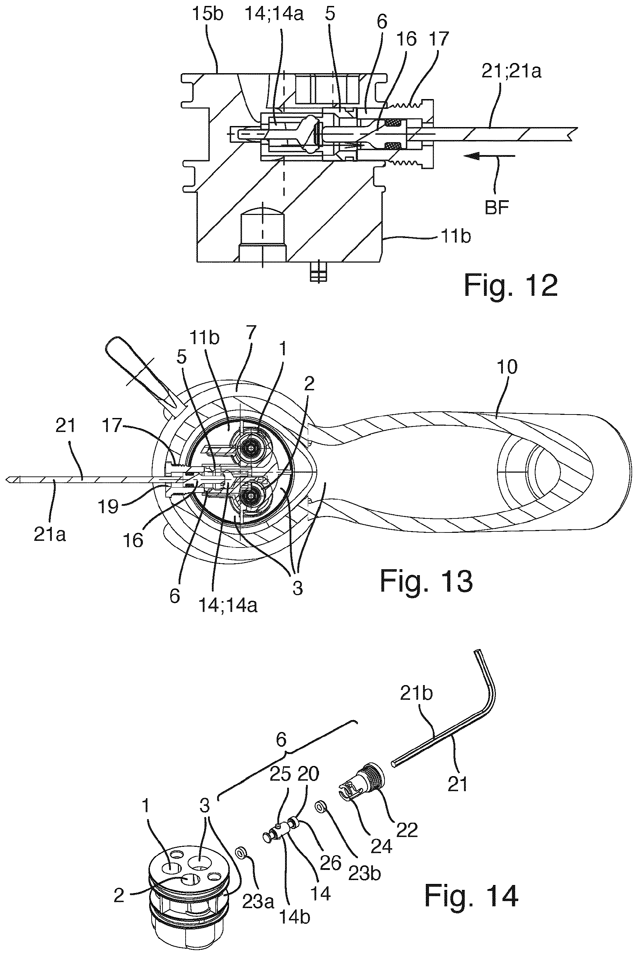

In entsprechenden Ausführungen ist die Bypassventileinheit 6, wie im Beispiel der Fig. 14 bis 22, in ihrer Schließstellung und in ihrer Offenstellung jeweils selbsthaltend ausgeführt, in alternativen Ausführungen z.B. nur in ihrer Schließstellung, wie im Beispiel der Fig. 3 bis 13, wobei dann der Benutzer die Bypassventileinheit 6 so lange wie benötigt in ihrer Offenstellung hält.

In entsprechenden Realisierungen ist die Bypassventileinheit 6, wie im Beispiel der Fig. 3 bis 13, als Rückschlagventileinheit ausgeführt, die durch einen Fluiddruck im Zweitfluidkanal 2 in Richtung ihrer Schließstellung beaufschlagt ist, so dass ihre Schließstellung unter der Wirkung des Fluiddrucks im Zweitfluidkanal 2 selbsthaltend ist. Zusätzlich kann die Bypassventileinheit in ihre Schließrichtung z.B. mittels eines elastischen Elements, wie einer Feder, vorgespannt sein, wie für Rückschlagventileinheiten an sich bekannt.

In entsprechenden Realisierungen weist die Bypassventileinheit 6 einen Ventilschließkörper 14 auf, der zwischen einer selbsthaltenden Schließstellung und einer rastend selbsthaltenden, nutzerbetätigt ausrastbaren Offenstellung bewegbar ist, wie bei der in der sanitären Auslaufarmatur der Fig. 14 bis 22 benutzten Misch- und Absperrventilvorrichtung 11. In alternativen Ausführungen ist die Offenstellung des Ventilschließkörpers 14 nicht rastend selbsthaltend realisiert, sondern z.B. nicht-selbsthaltend, wie bei der in der Auslaufarmatur der Fig. 3 bis 13 verwendeten Misch- und Absperrventilvorrichtung 11. In diesem Fall hält der Benutzer den Ventilschließkörper 14 so lange wie benötigt in seiner Offenstellung.

In vorteilhaften Ausführungen beinhaltet die Misch- und Absperrventilvorrichtung, wie in den Bauformen, die in den Auslaufarmaturen der Fig. 3 bis 22 verwendet sind, einen Hauptgehäusekörper 11a, in dem die Hauptventileinheit 4 angeordnet ist, und einen Zusatzgehäusekörper 11b, der über korrespondierende, aneinanderliegende Koppelflächen 15a, 15b am Hauptgehäusekörper 11a bzw. am Zusatzgehäusekörper 11b mit dem Hauptgehäusekörper 11a gekoppelt ist. Durch den Zusatzgehäusekörper 11b hindurch erstrecken sich jeweils getrennt voneinander der Erstfluidkanal 1, der Zweitfluidkanal 2 und der Mischfluidkanal 3. Die Ventilvorrichtung kann z.B. in einer Kartuschenbauform von an sich bekannter Art realisiert sein, wobei der Hauptgehäusekörper 11a von einem Kartuschenkörper gebildet ist, der den Zusatzgehäusekörper 11b integriert enthält oder dem der Zusatzgehäusekörper 11b hinzugefügt werden kann. Der Zusatzgehäusekörper 11b kann hierbei bei Bedarf als ein Adapterboden fungieren, mit dem die Ventilvorrichtung an die jeweils vorliegende Anschlusskonfiguration z.B. der betreffenden sanitären Auslaufarmatur adaptiert, d.h. angepasst, werden kann.

In den gezeigten Ausführungsbeispielen erstrecken sich speziell der Erstfluidkanal 1 und der Zweitfluidkanal 2 axial durch den zylinderförmigen Zusatzgehäusekörper 11b hindurch, wobei an der einen Stirnseite des Zusatzgehäusekörpers 11b die Erstfluid-Zuführung 8 und die Zweitfluid-Zuführung 9 einmünden und an der gegenüberliegenden Stirnseite der Erstfluidkanal 1 und der Zweitfluidkanal 2 in an der korrespondierenden Koppelfläche 15a des Hauptgehäusekörpers 11a mündende Kanalabschnitte des Mischventilteils MV der Hauptventileinheit 4 übergehen. Der Mischfluidkanal 3 gelangt in diesen Ausführungsbeispielen vom Absperrventilteil AV der Hauptventileinheit 4 über die korrespondierenden Koppelflächen 15a, 15b axial in den Zusatzgehäusekörper 11b und mündet aus diesem in einem radial nach außen freiliegenden Bereich zwischen den beiden Stirnseiten aus, um von dort zum Fluidauslauf 10 der sanitären Auslaufarmatur weiterzuführen.

In alternativen Ausführungen sind die Fluidführungen für den Erstfluidkanal 1, den Zweitfluidkanal 2 und/oder den Mischfluidkanal 3 im Zusatzgehäusekörper 11b anders gewählt, z.B. für den Mischfluidkanal 3 axial durchgehend und für den Erstfluidkanal 1 oder den Zweitfluidkanal 2 mit einem Verlauf zwischen einer der beiden Stirnseiten und einem Umfangsbereich des Zusatzgehäusekörpers 11b nach Art des Verlaufs des Mischfluidkanals 3 in den gezeigten Beispielen.

In diesen Ausführungen der Misch- und Absperrventilvorrichtung mit an den Hauptgehäusekörper 11a angekoppeltem Zusatzgehäusekörper 11b ist der Zweitfluid-Bypasskanal 5 im Zusatzgehäusekörper 11b ausgebildet, und die Bypassventileinheit 6 ist im Zusatzgehäusekörper 11b angeordnet, wie in den gezeigten Ausführungsbeispielen. Speziell ist hierfür im Zusatzgehäusekörper 11b eine direkte Verbindung des Zweitfluidkanals 2 zum Mischfluidkanal 3 geschaffen, die von der Bypassventileinheit 6 stellungsabhängig geschlossen gehalten oder geöffnet wird. Da diese direkte Verbindung vom Zweitfluidkanal 2 zum Mischfluidkanal 3 stromaufwärts der Hauptventileinheit 4 vom Zweitfluidkanal 2 abzweigt und stromabwärts der Hauptventileinheit 4 in den Mischfluidkanal 3 mündet, umgeht der Zweitfluid-Bypasskanal 5 im Zusatzgehäusekörper 11b wie gewünscht die Hauptventileinheit 4 bezüglich der Führung des zweiten Fluids F2.

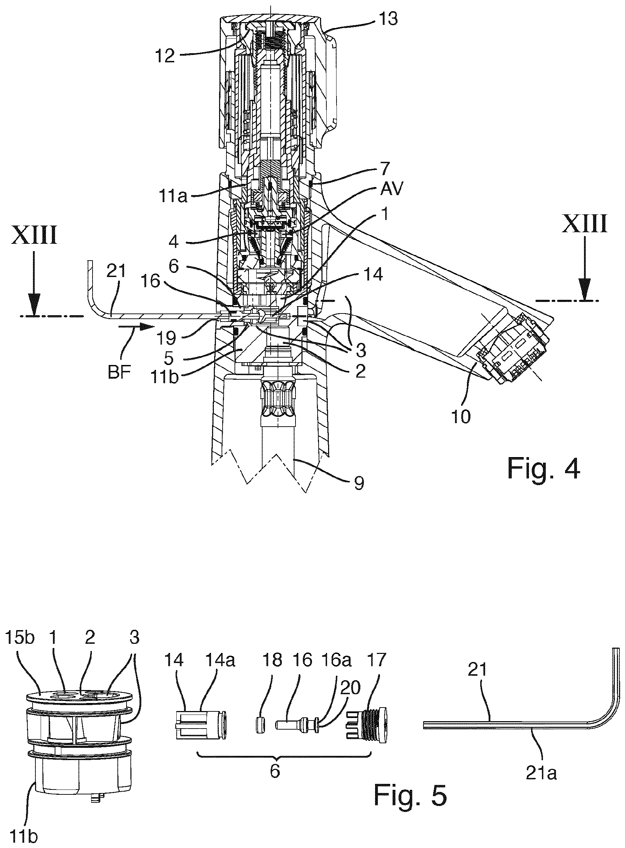

In vorteilhaften Ausführungen besitzt die Bypassventileinheit 6 einen Rückschlagventilaufbau, wie er aus der Explosionsansicht von Fig. 5 deutlich zu erkennen ist. In dieser Realisierung umfasst die Bypassventileinheit 6 den Ventilschließkörper 14 als ein über einen Betätigungsstößel 16 axial bewegbares Rückschlagventilelement 14a, wobei ein Rückschlagventil-Klemmelement 17 zur Festlegung am Armaturengehäusekörper 7 dient und ein O-Gummiring 18 für die nötige Abdichtung sorgt.

In entsprechenden Ausführungen beinhaltet die Bypassventileinheit 6 wie in den gezeigten Ausführungsbeispielen eine Werkzeugschnittstelle 20 zur Ankopplung eines Bypassventil-Betätigungswerkzeugs 21, das in die Bypassventil-Betätigungsöffnung 19 einführbar ist. Im Ausführungsbeispiel der Fig. 3 bis 13 dient als Bypassventil-Betätigungswerkzeug ein Druckbetätigungsstab 21a, der in die Bypassventil-Betätigungsöffnung 19 eingeführt werden kann, um gegen eine in diesem Fall als Werkzeugschnittstelle 20 fungierende Anschlagfläche an einer zugewandten Stirnseite 16a des Betätigungsstößels 16 zur Anlage zu kommen.

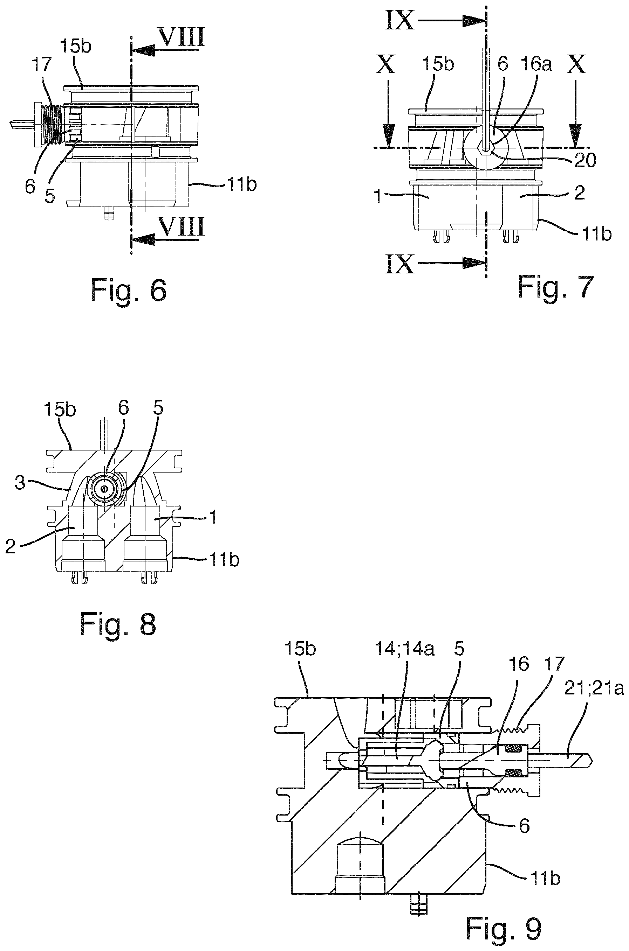

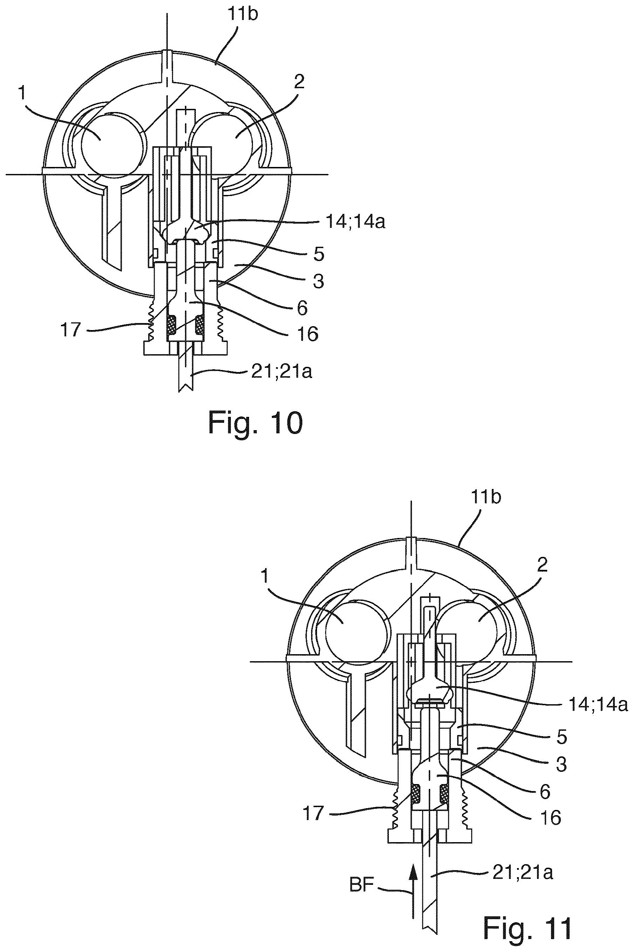

Im normalen Betrieb der Auslaufarmatur der Fig. 3 bis 13 befindet sich die als Rückschlagventileinheit ausgeführte Bypassventileinheit 6 unter der Wirkung des Fluiddrucks im Mischfluidkanal 3 in ihrer selbsthaltenden Schließstellung gemäß den Fig. 3, 9 und 10, wobei in den Fig. 9 und 10 der Druckbetätigungsstab 21 in Anlagestellung gegen den Betätigungsstößel 16 gezeigt ist, jedoch ohne einwirkende Stößelbetätigungskraft. Die Fig. 4, 11 und 12 zeigen die Auslaufarmatur in einem Bypassbetrieb mit der Bypassventileinheit 6 der Misch- und Absperrventilvorrichtung 11 in ihrer Bypass-Offenstellung. Dazu drückt der Benutzer über den Druckbetätigungsstab 21 unter Einwirkung mit einer entsprechenden axialen Betätigungskraft BF den Ventilschließkörper 14 in Form des Rückschlagventilelements 14a axial in seine Offenstellung vor, in welcher der Ventilschließkörper 14 den Bypasskanal 5 öffnet, den er in der Schließstellung geschlossen hält.

Der Benutzer hält das Rückschlagventilelement 14a so lange in seiner vorgeschobenen Position gedrückt, wie er den entsprechenden Bypassbetrieb aufrechterhalten will, in welchem das zweite Fluid F2 über den Bypasskanal 5 in den Mischfluidkanal 3 gelangt. Diese Betriebsweise kann er beispielsweise zum oben erwähnten Zweck einer thermischen Desinfektion der Auslaufarmatur aktivieren. In diesem Fall ist das erste Fluid F1 Kaltwasser und das zweite Fluid F2 Warmwasser, und der Benutzer sorgt durch den Bypassbetrieb dafür, dass die Auslaufarmatur über den benötigten Zeitraum hinweg mit dem über den Bypasskanal 5 geführten Warmwasser durchgespült wird. Sobald der Benutzer den Bypassbetrieb beenden will, zieht er den Druckbetätigungsstab 21 aus der Bypassventil-Betätigungsöffnung 19 ab, wodurch das Rückschlagventilelement 14a selbsttätig wieder seine selbsthaltende Schließstellung einnimmt.

Die in den Fig. 14 bis 22 veranschaulichte Ausführungsvariante entspricht derjenigen der Fig. 3 bis 13 mit dem Unterschied, dass die Bypassventileinheit 6 einen modifizierten Aufbau besitzt. Bei der dort verwendeten Misch- und Absperrventilvorrichtung 11 beinhaltet die Bypassventileinheit 6, wie insbesondere aus der Explosionsansicht von Fig. 14 deutlich zu erkennen, einen Dichtstößel 14b als beweglichen Ventilschließkörper 14 und ein am Armaturengehäusekörper 7 festlegbares und dessen Bypassventil-Betätigungsöffnung 19 definierendes Dichtstößelführungselement 22. Zwei O-Gummiringe 23a, 23b sorgen für die benötigte Abdichtung des Dichtstößels 14b. Soweit nachstehend nichts anderes gesagt ist, entspricht die Misch- und Absperrventilvorrichtung 11 gemäß den Fig. 14 bis 22 hinsichtlich Aufbau und Funktion derjenigen, wie sie im Beispiel der Fig. 3 bis 13 verwendet ist, insbesondere hinsichtlich des Aufbaus von Hauptgehäusekörper 11a und Zusatzgehäusekörper 11b und der Ausbildung des Zweitfluid-Bypasskanals 5.

Bei der Misch- und Absperrventilvorrichtung gemäß den Fig. 14 bis 22 weist der Ventilschließkörper 14 in Form des Dichtstößels 14b eine selbsthaltende Schließstellung unter der Wirkung des Fluiddrucks im Mischfluidkanal 3, wie beim Ausführungsbeispiel der Fig. 3 bis 13, und eine rastend selbsthaltende, nutzerbetätigt ausrastbare Offenstellung auf. In der gezeigten Realisierung weist die Bypassventileinheit 6 hierfür eine Kulissenführung mit einem in einer Kulissenbahn 24 geführten Kulissennocken 25 auf. Speziell sind im gezeigten Beispiel am Umfang des Dichtstößels 14b diametral gegenüberliegend zwei Kulissennocken 25 vorgesehen, die in je einer von zwei korrespondierenden, am Dichtstößelführungselement 22 ausgebildeten Kulissenbahnen 24 geführt sind. In alternativen Ausführungen sind es nur ein Kulissennocken 25 und eine Kulissenbahn 24 oder mehr als zwei Kulissennocken 25 und zugehörige Kulissenbahnen 24.

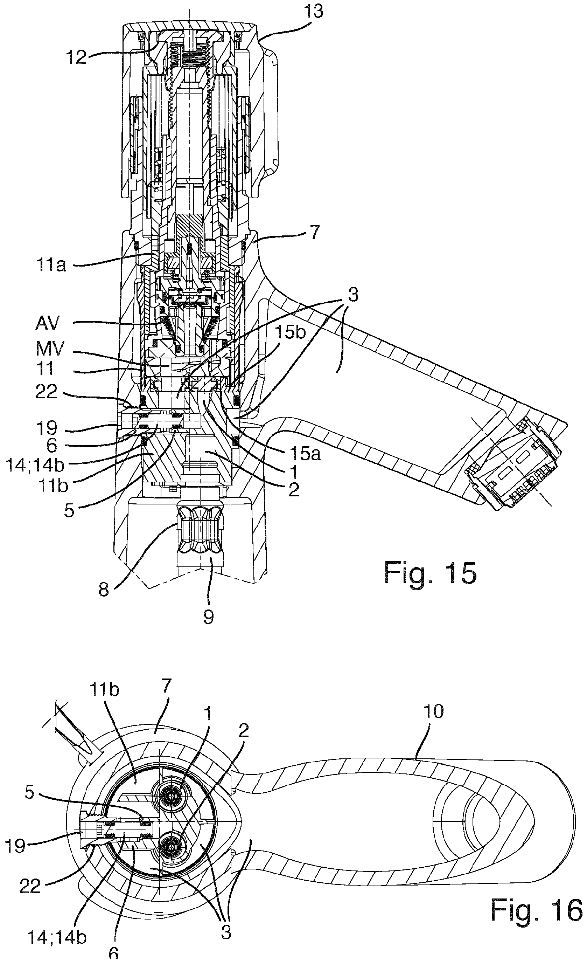

Die Fig. 15 bis 17 zeigen die Bypassventileinheit 6 in ihrer selbsthaltenden Schließstellung. In dieser wird der Dichtstößel 14b durch den Fluiddruck im Mischfluidkanal 3 selbsthaltend, rastend in einer axial rückwärtigen Stellung gehalten, in welcher der jeweilige Kulissennocken 25 in eine zugehörige, axiale Schließstellungs-Rastausnehmung 24a der zugehörigen Kulissenbahn 24 eingreift bzw. einrastet.

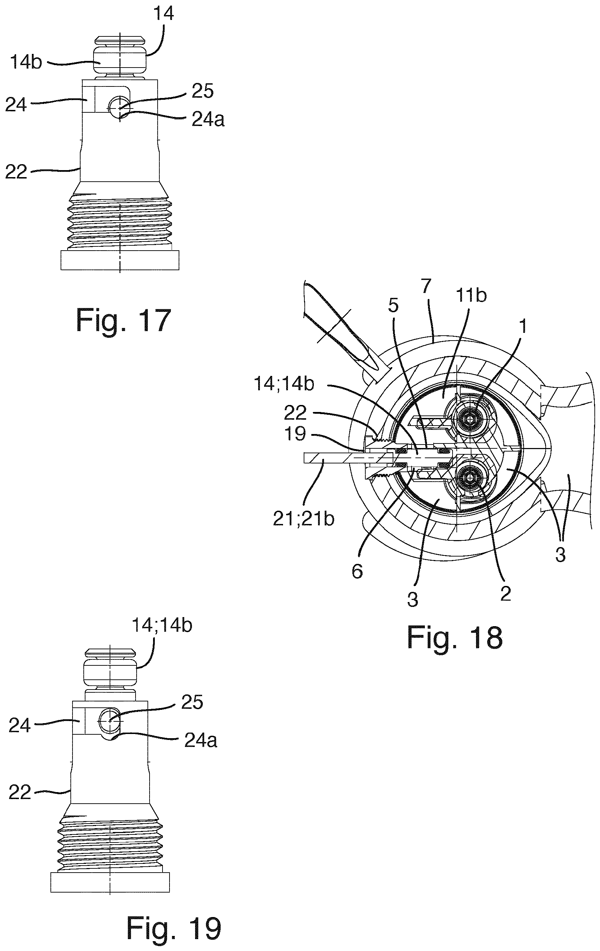

Die Fig. 18 und 19 veranschaulichen die Situation, in welcher der Dichtstößel 14b der Bypassventileinheit 6 aus seiner rückwärtigen, eingerasteten Schließstellung vom Benutzer unter Verwendung des Bypassventil-Betätigungswerkzeugs 21 durch entsprechende axiale Vorbewegung ausgerastet ist, so dass der Dichtstößel 14b anschließend gegenüber dem Dichtstößelführungselement 22 verdreht werden kann, wozu die jeweilige Kulissenbahn 24 einen in Umfangsrichtung des zylindrischen Dichtstößelführungselements 22 verlaufenden Abschnitt aufweist, der sich beispielsweise über einen Umfangswinkel von 90°, alternativ über weniger oder mehr als 90°, erstrecken kann.

Um die Verdrehung bewirken zu können, fungiert in diesem Beispiel als Werkzeugschnittstelle 20 der Bypassventileinheit 6 eine Mehrkantaufnahme in einem Kopfbereich 26 des Dichtstößels 14b, und dazu passend wird als Bypassventil-Betätigungswerkzeug 21 ein korrespondierender Mehrkantschlüssel 21b verwendet, der in die Bypassventil-Betätigungsöffnung 19 eingeführt und drehfest in die Mehrkantaufnahme des Dichtstößels 14b eingefügt werden kann.

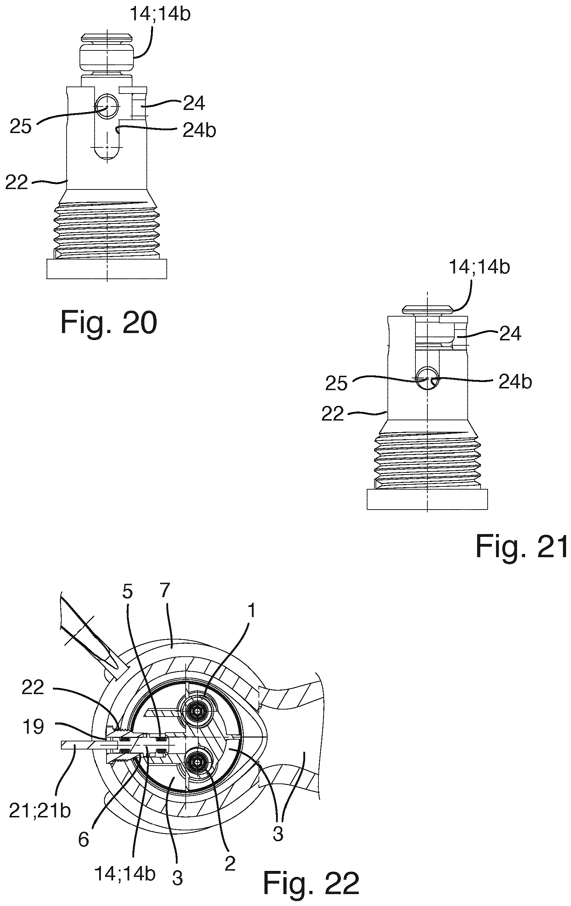

In Fig. 20 ist die Lage des Dichtstößels 14b relativ zum Dichtstößelführungselement 22 nach der besagten Verdrehung gezeigt. In dieser gegenüber derjenigen von Fig. 19 entgegengesetzten Drehstellung des Dichtstößels 14b liegt der jeweilige Kulissennocken 25 in Umfangsrichtung einer axialen Offenstellungs-Rastausnehmung 24b der Kulissenbahn 24 im Dichtstößelführungselement 22 gegenüber.

Wenn der Benutzer in dieser Zwischenstellung des Dichtstößels 14b das Bypassventil-Betätigungswerkzeug 21, d.h. den Mehrkantschlüssel 21b, aus der Bypassventil-Betätigungsöffnung 19 des Armaturengehäusekörpers 7 herauszieht, gelangt der Dichtstößel 14b fluiddruckbedingt in eine entsprechende, rastende, unter der Wirkung des Fluiddrucks im Mischfluidkanal 3 selbsthaltende Offenstellung, wodurch die Bypassventileinheit 6 ebenfalls selbsthaltend ihre Bypass-Offenstellung einnimmt, wie in den Fig. 21 und 22 gezeigt. Damit ist der Bypassbetrieb mit geöffneter Bypassventileinheit 6 aktiviert, wobei in diesem Ausführungsbeispiel der Bypassbetrieb aufrechterhalten bleibt, ohne dass der Benutzer dazu dauerhaft auf die Bypassventileinheit 6 einwirken braucht.

Wenn der Benutzer den Bypassbetrieb beenden will, führt er den Mehrkantschlüssel 21b durch die Bypassventil-Betätigungsöffnung 19 hindurch wieder in die Mehrkantaufnahme am Dichtstößel-Kopfbereich 26 ein und führt den oben zur Verstellung der Bypassventileinheit 6 von ihrer Schließstellung in ihre Offenstellung beschriebenen Bewegungsablauf in umgekehrter Reihenfolge aus. Dazu drückt er zunächst den Dichtstößel 14b axial so weit nach vorn, dass er aus seiner in Fig. 21 gezeigten Raststellung in der Offenstellungs-Rastausnahme 24b in die Stellung von Fig. 20 ausrastet, von welcher er anschließend wieder in die Stellung gemäß Fig. 19 zurückgedreht werden kann. Nach Loslassen des Dichtstößels 14b durch Abziehen des Mehrkantschlüssels 21b gelangt dann der Dichtstößel 14b fluiddruckbedingt wieder in seine rastend selbsthaltende Schließstellung mit dem jeweiligen Kulissennocken 25 in der zugehörigen Schließstellungs-Rastaufnahme 24a gemäß Fig. 17.

Wie die gezeigten und die weiteren oben erläuterten Ausführungsbeispiele deutlich machen, stellt die Erfindung in vorteilhafter Weise eine sanitäre Auslaufarmatur mit einer Misch- und Absperrventilvorrichtung zur Verfügung, die über die Möglichkeit verfügt, von zwei zwecks Mischung zuführbaren Fluiden bei Bedarf das eine Fluid über einen zugeordneten Bypasskanal direkt in den Mischfluidkanal zu führen und dabei eine für die Mischung der Fluide dienende Hauptventileinheit zu umgehen, und bei der diese Möglichkeit mit einer Selbstschlussfunktionalität oder einer Fluidsparfunktionalität kombiniert werden kann. Über eine zugehörige Bypassventileinheit kann diese Bypassfunktionalität vom Benutzer wahlweise aktiviert und deaktiviert werden.

Die erfindungsgemäße sanitäre Auslaufarmatur eignet sich insbesondere zur Verwendung in Mischerarmaturen für Waschtische, Badewannen und Küchenspülen.

## Patentansprüche

1. Sanitäre Auslaufarmatur mit
- einem Armaturengehäusekörper (7),
- einer Erstfluid-Zuführung (8) in den Armaturengehäusekörper (7), einer Zweitfluid-Zuführung (9) in den Armaturengehäusekörper (7) und einem Fluidauslauf (10) aus dem Armaturengehäusekörper (7),
- einer Misch- und Absperrventilvorrichtung (11), die
- einen Erstfluidkanal (1), der zur Zuführung eines ersten Fluids (F1) eingerichtet ist und in den die Erstfluid-Zuführung (8) mündet,
- einen Zweitfluidkanal (2), der zur Zuführung eines zweiten Fluids (F2) getrennt vom ersten Fluid (F1) eingerichtet ist und in den die Zweitfluid-Zuführung (9) mündet,
- einen Mischfluidkanal (3), in den der Erstfluidkanal (1) und der Zweitfluidkanal (2) zur Bildung von Mischfluid (FM) des ersten und des zweiten Fluids (F1, F2) einmünden und der zur Abgabe des Mischfluids (FM) eingerichtet ist,
- eine nutzerbetätigte Hauptventileinheit (4), die zur Mischungsverhältniseinstellung von in den Mischfluidkanal (3) geleitetem Erstfluid (F1) und in den Mischfluidkanal (3) geleitetem Zweitfluid (F2) und zur Mengeneinstellung von über den Mischfluidkanal (3) abgeführtem Mischfluid (FM) eingerichtet ist und eine nicht-selbsthaltende Zweitfluid-Volloffenstellung aufweist,
- einen Zweitfluid-Bypasskanal (5), der vom Zweitfluidkanal (2) in den Mischfluidkanal (3) führt und die Hauptventileinheit (4) bezüglich des Zweitfluids (F2) umgeht, und
- eine Bypassventileinheit (6) aufweist, die im Zweitfluid-Bypasskanal (5) angeordnet ist und nutzerbetätigt zwischen einer Bypass-Schließstellung und einer Bypass-Offenstellung verstellbar ist, und
- einer am Armaturengehäusekörper (7) angeordneten Hauptventilbetätigungseinheit (12) als Nutzerschnittstelle zur Betätigung der Hauptventileinheit (4),
**dadurch gekennzeichnet, dass**
- der Armaturengehäusekörper (7) eine Bypassventil-Betätigungsöffnung (19) aufweist, durch die hindurch die Bypassventileinheit (6) nutzerbetätigbar ist.

2. Sanitäre Auslaufarmatur nach Anspruch 1, weiter **dadurch gekennzeichnet, dass** die Bypassventileinheit (6) in der Bypass-Schließstellung und in der Bypass-Offenstellung jeweils selbsthaltend ausgeführt ist.

3. Sanitäre Auslaufarmatur nach Anspruch 2, weiter **dadurch gekennzeichnet, dass** die Bypassventileinheit (6) einen Ventilschließkörper (14) aufweist, der zwischen einer selbsthaltenden Schließstellung und einer rastend selbsthaltenden, nutzerbetätigt ausrastbaren Offenstellung bewegbar ist.

4. Sanitäre Auslaufarmatur nach Anspruch 2 oder 3, weiter **dadurch gekennzeichnet, dass** die Bypassventileinheit (6) als Rückschlagventileinheit ausgeführt ist, die durch einen Fluiddruck im Zweitfluidkanal (2) in Richtung ihrer Schließstellung beaufschlagt ist.

5. Sanitäre Auslaufarmatur nach einem der Ansprüche 1 bis 4, weiter **gekennzeichnet durch**
- einen Hauptgehäusekörper (11a), in dem die Hauptventileinheit (4) angeordnet ist, und
- einen Zusatzgehäusekörper (11b), der über korrespondierende, aneinanderliegende Koppelflächen (15a, 15b) mit dem Hauptgehäusekörper (11a) gekoppelt ist und durch den hindurch sich jeweils getrennt voneinander der Erstfluidkanal (1), der Zweitfluidkanal (2) und der Mischfluidkanal (3) erstrecken,
- wobei der Zweitfluid-Bypasskanal (5) im Zusatzgehäusekörper (11b) ausgebildet ist und die Bypassventileinheit (6) im Zusatzgehäusekörper (11b) angeordnet ist.

6. Sanitäre Auslaufarmatur nach einem der Ansprüche 1 bis 5, weiter **dadurch gekennzeichnet, dass** die Hauptventileinheit (4) als Selbstschlussventileinheil ausgeführt ist, die selbsttätig in eine Mischfluid-Schließstellung gelangt.

7. Sanitäre Auslaufarmatur nach einem der Ansprüche 1 bis 6, weiter **dadurch gekennzeichnet, dass** die Hauptventileinheit (4) als selbstdrosselnde Zweitfluid-Ventileinheit ausgeführt ist, die selbsttätig aus der Zweitfluid-Volloffenstellung in eine Zweitfluid-Schließstellung oder eine Zweitfluid-Teiloffenstellung gelangt.

8. Sanitäre Auslaufarmatur nach einem der Ansprüche 1 bis 7, weiter **dadurch gekennzeichnet, dass** die Bypassventileinheit (6) eine Werkzeugschnittstelle (20) zur Ankopplung eines Bypassventil-Betätigungswerkzeugs (21) aufweist, das in die Bypassventil-Betätigungsöffnung (19) einführbar ist.

9. Sanitäre Auslaufarmatur nach einem der Ansprüche 1 bis 8, weiter **dadurch gekennzeichnet, dass** die Hauptventilbetätigungseinheit (12) ein am Armaturengehäusekörper (7) dreh- und axialbeweglich angeordnetes Hauptventil-Bedienelement (13) aufweist, dessen Axialbewegung zur Mengeneinstellung dient und dessen Drehbewegung zur Mischungsverhältniseinstellung dient.

## Claims

1. Sanitary outlet fitting, comprising
- a fitting housing body (7),
- a first fluid supply (8) into the fitting housing body (7), a second fluid supply (9) into the fitting housing body (7), and a fluid outlet (10) out of the fitting housing body (7),
- a mixing and shut-off valve device (11) which comprises
- a first fluid channel (1) which is configured for supplying a first fluid (F1) and into which the first fluid supply (8) enters,
- a second fluid channel (2) which is configured for supplying a second fluid (F2) separate from the first fluid (F1) and into which the second fluid supply (9) enters,
- a mixing fluid channel (3) into which the first fluid channel (1) and the second fluid channel (2) enter for producing mixed fluid (FM) of the first fluid and the second fluid (F1, F2) and which is configured for discharging the mixed fluid (FM),
- a user-operated main valve unit (4) which is configured for setting a mixing ratio of first fluid (F1) introduced into the mixing fluid channel (3) and second fluid (F2) introduced into the mixing fluid channel (3) and for setting an amount of mixed fluid (FM) discharged via the mixing fluid channel (3) and which comprises a not self-retaining second fluid full open position,
- a second fluid bypass channel (5) leading from the second fluid channel (2) into the mixing fluid channel (3) and bypassing the main valve unit (4) in relation to the second fluid (F2), and
- a bypass valve unit (6) which is arranged in the second fluid bypass channel (5) and is adjustable between a bypass closed position and a bypass open position upon user-operation, and
- a main valve actuation unit (12) disposed on the fitting housing body (7) as a user interface for actuating the main valve unit (4),
**characterized in that**
- the fitting housing body (7) comprises a bypass valve actuation opening (19) through which the bypass valve unit (6) is user-operable.

2. Sanitary outlet fitting according to claim 1, further **characterized in that** the bypass valve unit (6) is self-retaining in each of the bypass closed position and the bypass open position.

3. Sanitary outlet fitting according to claim 2, further **characterized in that** the bypass valve unit (6) comprises a valve closing body (14) which is movable between a self-retaining closed position and a locking self-retaining open position, unlockable by user-operation.

4. Sanitary outlet fitting according to claim 2 or 3, further **characterized in that** the bypass valve unit (6) is embodied as a non-return valve unit which is pressurized by a fluid pressure in the mixing fluid channel (2) in the direction towards its closed position.

5. Sanitary outlet fitting according to any one of claims 1 to 4, further **characterized by**
- a main housing body (11a) in which the main valve unit (4) is disposed, and
- an additional housing body (11b) which is coupled to the main housing body (11a) via corresponding, adjoining coupling surfaces (15a, 15b) and through which the first fluid channel (1), the second fluid channel (2) and the mixing fluid channel (3) respectively extend separately from each other,
- wherein the second fluid bypass channel (5) is provided in the additional housing body (11b) and the bypass valve unit (6) is arranged in the additional housing body (11b).

6. Sanitary outlet fitting according to any one of claims 1 to 5, further **characterized in that** the main valve unit (4) is embodied as a self-closing valve unit which reaches a mixed fluid closed position in a self-acting manner.

7. Sanitary outlet fitting according to any one of claims 1 to 6, further **characterized in that** the main valve unit (4) is embodied as a self-restricting second fluid valve unit which from the second fluid full open position reaches a second fluid closed position or a second fluid partial open position in a self-acting manner.

8. Sanitary outlet fitting according to any one of claims 1 to 7, further **characterized in that** the bypass valve unit (6) comprises a tool interface (20) for coupling a bypass valve operating tool (21) which is insertable into the bypass valve actuation opening (19).

9. Sanitary outlet fitting according to any one of claims 1 to 8, further **characterized in that** the main valve actuation unit (12) comprises a main valve control element (13) disposed on the fitting housing body for rotational and axial movement, with the axial movement thereof acting to set a flow volume and the rotational movement thereof acting to set a mixing ratio.

## Revendications

1. Robinetterie d'écoulement sanitaire, comprenant
- un corps de boîtier de robinetterie (7),
- une alimentation en premier fluide (8) dans le corps de boîtier de robinetterie (7), une alimentation en deuxième fluide (9) dans le corps de boîtier de robinetterie (7), et une sortie de fluide (10) hors du corps de boîtier de robinetterie (7),
- un dispositif de vanne de mélange et d'arrêt (11) comprenant
- un canal de premier fluide (1) qui est conçu pour alimenter un premier fluide (F1) et qui débouche dans l'alimentation en premier fluide (8),
- un canal de deuxième fluide (2) qui est conçu pour alimenter un deuxième fluide (F2) séparément du premier fluide et qui débouche dans l'alimentation en deuxième fluide (9),
- un canal de fluide mixte (3) dans lequel débouchent le canal de premier fluide (1) et le canal de deuxième fluide (2) pour former un fluide mixte (FM) des premier et deuxième fluides (F1, F2) et qui est conçu pour distribuer le fluide mixte (FM),
- une unité de vanne principale (4) actionnée par l'utilisateur, qui est conçue pour régler le rapport de mélange du premier fluide (F1) introduit dans le canal de fluide mixte (3) et du deuxième fluide (F2) introduit dans le canal de fluide mixte (3) et pour régler le débit du fluide mixte (FM) évacué via le canal de fluide mixte (3), et qui présente une position d'ouverture complète de deuxième fluide non-autobloquante,
- un canal de dérivation de deuxième fluide (5) qui mène du canal de deuxième fluide (2) dans le canal de fluide mixte (3) et qui contourne l'unité de vanne principale (4) par rapport au deuxième fluide (F2), et
- une unité de vanne de dérivation (6) qui est disposée dans le canal de dérivation de deuxième fluide (5) et qui peut être réglée, sous la commande de l'utilisateur, entre une position de fermeture de la dérivation et une position d'ouverture de la dérivation, et
- une unité d'actionnement de vanne principale (12) disposée sur le corps de boîtier de robinetterie (7) et servant d'interface utilisateur pour l'actionnement de l'unité de vanne principale (4),
**caractérisée en ce que**
- le corps de boîtier de robinetterie (7) présente un orifice d'actionnement de vanne de dérivation (19) à travers lequel l'unité de vanne de dérivation (6) peut être actionnée par l'utilisateur.

2. Robinetterie d'écoulement sanitaire selon la revendication 1, **caractérisée en outre en ce que** l'unité de vanne de dérivation (6) est réalisée de manière à être respectivement autobloquante dans la position de fermeture de la dérivation et dans la position d'ouverture de la dérivation.

3. Robinetterie d'écoulement sanitaire selon la revendication 2, **caractérisée en outre en ce que** l'unité de vanne de dérivation (6) présente un corps de fermeture de vanne (14) qui peut être déplacé entre une position de fermeture autobloquante et une position d'ouverture autobloquante par enclenchement, pouvant être désenclenchée par l'utilisateur.

4. Robinetterie d'écoulement sanitaire selon la revendication 2 ou 3, **caractérisée en outre en ce que** l'unité de vanne de dérivation (6) est réalisée sous forme d'unité de vanne anti-retour qui est sollicitée en direction de sa position de fermeture par une pression de fluide dans le canal de deuxième fluide (2).

5. Robinetterie d'écoulement sanitaire selon l'une des revendications 1 à 4,
**caractérisée en outre par**
- un corps de boîtier principal (11a) dans lequel est disposée l'unité de vanne principale (4), et
- un corps de boîtier supplémentaire (11b) qui est couplé au corps de boîtier principal (11a) par l'intermédiaire de surfaces de couplage correspondantes (15a, 15b) en appui l'une contre l'autre, et à travers lequel s'étendent respectivement et séparément le canal de premier fluide (1), le canal de deuxième fluide (2) et le canal de fluide mixte (3),
- le canal de dérivation de deuxième fluide (5) étant formé dans le corps de boîtier supplémentaire (11b), et l'unité de vanne de dérivation (6) étant disposée dans le corps de boîtier supplémentaire (11b).

6. Robinetterie d'écoulement sanitaire selon l'une des revendications 1 à 5,
**caractérisée en outre en ce que** l'unité de vanne principale (4) est réalisée sous la forme d'une unité de vanne à fermeture automatique qui parvient automatiquement dans une position de fermeture de fluide mixte.

7. Robinetterie d'écoulement sanitaire selon l'une des revendications 1 à 6,
**caractérisée en outre en ce que** l'unité de vanne principale (4) est réalisée sous la forme d'une unité de vanne de deuxième fluide à étranglement automatique, qui parvient automatiquement de la position d'ouverture complète de deuxième fluide à une position de fermeture de deuxième fluide ou à une position d'ouverture partielle de deuxième fluide.

8. Robinetterie d'écoulement sanitaire selon l'une des revendications 1 à 7,
**caractérisée en outre en ce que** l'unité de vanne de dérivation (6) présente une interface d'outil (20) pour le couplage d'un outil d'actionnement de vanne de dérivation (21), qui peut être introduit dans l'orifice d'actionnement de vanne de dérivation (19).

9. Robinetterie d'écoulement sanitaire selon l'une des revendications 1 à 8,
**caractérisée en outre en ce que** l'unité d'actionnement de vanne principale (12) présente un élément de commande de vanne principale (13) disposé sur le corps de boîtier de robinetterie (7) de manière à pouvoir tourner et se déplacer axialement, dont le mouvement axial sert à régler le débit et dont le mouvement de rotation sert à régler le rapport de mélange.
